(19) **Europäisches Patentamt / European Patent Office / Office européen des brevets**

(11) **EP 2 627 953 B1**

(12) # EUROPEAN PATENT SPECIFICATION

(45) Date of publication and mention
of the grant of the patent:
**26.08.2015 Bulletin 2015/35**

(21) Application number: **11778817.4**

(22) Date of filing: **06.10.2011**

(51) Int Cl.:
**F24F 7/02** *(2006.01)*       **B60H 3/06** *(2006.01)*

(86) International application number:
**PCT/EP2011/067475**

(87) International publication number:
**WO 2012/049068 (19.04.2012 Gazette 2012/16)**

(54) **A DEVICE FOR REDUCING PARTICULATE AIR POLLUTION**

VORRICHTUNG ZUR REDUZIERUNG DER LUFTVERSCHMUTZUNG DURCH PARTIKEL

DISPOSITIF DE RÉDUCTION DE LA POLLUTION PARTICULAIRE DE L'AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2010 GB 201017163**

(43) Date of publication of application:
**21.08.2013 Bulletin 2013/34**

(73) Proprietor: **The Provost, Fellows, Foundation
Scholars, & the
other members of Board, of the College of the
Holy
& Undiv. Trinity of Queen Elizabeth near Dublin
Dublin 2 (IE)**

(72) Inventors:
• **MCNABOLA, Aonghus
Sligo (IE)**

• **GILL, Laurence
Phibsboro
Dublin 7 (IE)**
• **O'LUANAIGH, Niall
Dublin 2 (IE)**
• **VAN BREDA, Elmarie
Dublin 16 (IE)**

(74) Representative: **Lucey, Michael
PurdyLucey
Intellectual Property
6-7 Harcourt Terrace
D2 Dublin (IE)**

(56) References cited:
| | |
|---|---|
| WO-A1-03/052215 | AU-B2- 748 039 |
| RU-C1- 2 005 278 | SU-A1- 1 239 469 |
| US-A- 209 506 | |

## Description

### Field of the Invention

The invention relates to a device which aims to reduce the amount of particulate air pollution passing through it. More specifically, the invention relates to a device used as a means of reducing the amount of particulate air pollution entering or in a ventilation system of an enclosed area, for example a building or a vehicle.

### Background to the Invention

The problem/issue of human health in indoor and outdoor environments is one which has been highlighted by the World Health Organisation (WHO). WHO has assessed the contribution of a range of risk factors to the burden of disease on mankind and revealed that indoor air pollution is the 8th most important risk factor and is responsible for 2.7% of the global burden of disease. A study by the European Commission found that air pollution in Europe was responsible for 310,000 premature deaths annually. Indoor air pollution is therefore a serious threat to the quality of life of the global population.

Air pollution in the form of particulate matter (PM), microscopic particles which penetrate deep into the lungs of humans, have been shown to be associated with sudden cardiac death, respiratory death, cancer deaths and various illnesses. It has been found to be responsible for up to 10,000 premature deaths annually in the UK. A $10 \mu g/m^3$ increase in $PM_{10}$ (particles less than $10 \mu m$ in diameter) has been shown to be associated with a 1.5% increase in mortality rates.

Aspiration efficiency is a phenomenon which affects the transport of particles in a fluid passing through an orifice. Aspiration Efficiency, AE, can be defined as the efficiency with which particles are transported from the ambient environment into the inlet of a sampler (or any orifice *e.g.* a ventilation system inlet) and is expressed as the ratio of the concentration entering the cross sectional area of the inlet, C, to that in the undisturbed upstream air $C_0$, $AE = C/C_0$ (Kramer M. and Afchine A. (2004) Sampling Characteristics of inlets operated at low U/Uo ratios: new insight from Computational Fluid Dynamics (CFX) modelling. J. Aerosol Sci. 35 pp. 683-694).

Various techniques have been used to counter the particulate matter effects of air pollution entering buildings, vehicles and for those people who walk or cycle in busy cities with PM in the air. Such techniques include:

(1) *Precipitation Techniques* whereby electrostatic precipitators or electrostatic air cleaners remove particles from a flowing gas (such as air) using the force of an induced electrostatic charge. These are highly efficient filtration devices that minimally impede the flow of gases through the device, and can easily remove fine particulate matter such as dust and smoke from the air stream. However, this technology is very high in capital, operating cost and energy usage.

(2) *Chemical Techniques* such as air scrubbing which reduces the air pollution concentrations of various gases and particles. In the case of particulate matter wet scrubbing is employed whereby particles are removed by coming into contact with the scrubbing solution. The processes efficiency is greatly influenced by residence time in the scrubber. Again this technique involves high capital costs, operating costs and energy usage.

(3) *Filtering Techniques* such as where particulate concentration may be reduced through a filtering process whereby incoming air is forced through a filter with a pore size less than that of the target particle concentration. However, this process requires filters to be replaced regularly and also involves a significant pressure drop across the filter *i.e.* the process requires energy input and consumables.

Other methods to reduce air pollutants in general, or specifically in ventilations systems, for example, in WO 2006/003515 to Giles describes a device which treats air in particle filters of vehicles to prevent microbiological build up by using a volatile agent; a device described in US 2005/166583 to Peterson is designed to trap air pollutants entering a ventilation system by means of a thermal adsorption unit which removes harmful gases; RU 2262455 to Mikajlov describes a means to remove air impurities using an ultra violet radiation source.

AU 748039 and DE 3418417 discloses a device upon which the preamble of appending claim 1 is based.

An object of the present invention is to provide a device for reducing air pollutants to overcome at least some of the above-mentioned problems.

### Summary of the Invention

According to the present invention there is provided, as set out in the appended claims, an aspiration efficiency reducing device comprising a ventilation inlet for receiving airflow, an airflow diversion means, and a directional means, characterised in that the directional means is adapted such that the ventilation inlet is facing substantially opposite the direction of airflow.

The device of the present invention aims to provide a solution to the above-mentioned problems by using the phenomenon of aspiration efficiency (AE) but in reverse. AE has been used to maximise the performance of air pollution sampling devices, where an AE of 1.0 is most desirable. The device of the present invention uses AE in reverse to minimise the amount of particulate air pollution passing through the device, which is also referred to as the aspiration efficiency reducing device or aspiration efficiency reducer (AER). The device operates by manipulating the fluid physics and the forces of inertia and gravity on particles (*i.e.* factors which affect AE) to minimise the amount of particulate air pollutants entering through it, without any filters, motorised parts, energy input or consumable requirements *etc.*, in a simple effective solution to reduce air pollution exposure in an enclosed area.

The key advantages of the device of the present invention over existing technology lies in its simplicity, lack of operating costs or energy requirements, thus making the device environmentally friendly and energy efficient. The device is flexible in its applicability to either a commercial building for human health and energy savings or to compliment industrial applications. The device acts as a solution to improve the environmental health of occupants of buildings as it offers significant reductions in particulate matter exposure at an accessible cost. It also acts as an addition to a clean room technology system to reduce energy usage and operating costs. Furthermore the device can be adopted into vehicular ventilations systems or breathing masks.

In one embodiment, the airflow diversion means is mounted within a ventilation ducting system.

In one embodiment, the airflow directional means comprises a plurality of apertures facing substantially opposite the direction of airflow. The apertures may be adapted to divert the trajectory of oncoming particulate matter in the airflow to prevent the particulate matter from entering the ventilation inlet for receiving airflow.

In one embodiment, the airflow direction means comprises a series of parallel and alternating ridges and grooves. The series of parallel and alternating ridges and grooves may accommodate the plurality of apertures. Any particulate matter in the airflow is accelerated over the back of the ridges and grooves which discourages and prevents entry of the particulate matter through the airflow directional means.

In one embodiment, the airflow diversion means is adapted to accommodate the ventilation inlet.

In one embodiment, the airflow is a mechanically ventilated airflow.

In one embodiment, the device may be mounted on a freely rotating base.

In one embodiment, the airflow diversion means may be mounted on the freely rotating base.

In one embodiment, the airflow diversion means may be mounted within a ventilation ducting system.

In one embodiment, the airflow diversion means may be configured to accommodate the ventilation inlet.

In one embodiment, the airflow directional means may comprise a directional vane.

In one embodiment, the airflow directional means may comprise a series of parallel and alternating ridges and grooves.

In one embodiment, the ventilation inlet may be a blunt-nosed ventilation inlet.

In a further embodiment, the device may further comprise an anti-turbulence means.

In one embodiment, the anti-turbulence means may be positioned such that the airflow diversion means, the ventilation inlet and the anti-turbulence means are substantially aligned along a substantially horizontal axis in the opposite direction to airflow.

In one embodiment, the anti-turbulence means may comprise a plurality of apertures in a frame.

In one aspect of the invention, there is provided an air pollution reducing device comprising an aspiration efficiency device having a ventilation inlet, an airflow diversion means, a directional means, and an anti-turbulence means, characterised in that the directional means is adapted such that the ventilation inlet is facing substantially opposite the direction of ambient airflow.

In a further aspect of the invention, there is a provided an air pollution reducing device comprising an aspiration efficiency device as described above.

In a further aspect of the invention, there is provided a portable breathing mask comprising an aspiration efficiency device as described above.

In a still further aspect of the invention, there is provided a vehicular ventilation system comprising an aspiration efficiency device as described above.

Compared to other techniques, the present invention does not give a set reduction in concentrations regardless of factors such as wind speed or direction etc. For applications where strict reductions in indoor air pollution are required such as in clean rooms, the AER device would, operating in combination with a filtering technique or other intensive techniques, result in a reduction in costs and energy usage on average. The AER device of the present invention costs very little to manufacture and presents with very low operation and maintenance costs. The device also provides variable filtering and saves on the expense of replacing expensive filters used in ventilation devices commonly found in buildings and clean air rooms.

The device functions using the phenomenon of aspiration efficiency to reduce the concentration of particulate air pollution passing through it. Its novelty lies in the fact the aspiration efficiency has never been used in air pollution remediation devices and as a result of using this concept the device has no power requirements, filters resulting in low maintenance and/or operating costs.

In another embodiment there is provided a device comprising a ventilation inlet for receiving airflow, an airflow diversion means, and a directional means, characterised in that the directional means is adapted such that the ventilation inlet is facing substantially opposite the direction of airflow.

In another embodiment of the present invention, there is provided a device suitable for use as an out-of-duct aspiration efficiency reducing device comprising a ventilation inlet for receiving ambient airflow, an airflow diversion means, and a directional means, characterised in that the directional means is adapted such that the ventilation inlet is facing substantially opposite the direction of ambient airflow.

In another embodiment of the present invention, there is provided a device suitable for use as an in-duct aspiration efficiency reducing device comprising a ventilation inlet for receiving mechanically ventilated airflow, an airflow diversion means, and a directional means, characterised in that the directional means is adapted such that the ventilation inlet is facing substantially opposite the direction of mechanically ventilated airflow.

In the specification, the term "Airflow Directional Means (ADM)" of the device of the present invention should be understood to mean an arrangement which allows the transfer of air from one airflow direction to a second airflow direction while minimizing the amount of particles which are carried in this transfer. This can be achieved through an array of connecting apertures whereby i) the first airflow is substantially opposite in direction to the second airflow and ii) the array of connecting apertures are constructed to divert the trajectory of oncoming particles away from their inlets.

In the specification, the term "bounce-off" should be understood to mean a particle bouncing off the boundary structure of an inlet, significantly altering its trajectory such that it does not pass through the inlet.

In the specification, the term "out-of-duct" should be understood to whereby air flow 1 is the natural flow of the atmosphere while airflow 2 is forced ventilation suction. An "out-of-duct" device should be understood to mean positioning the aspiration efficiency device of the present invention at the opening of an inlet duct of a ventilation system. The device may be positioned on a roof, or any other surface which can support the device and the device can be positioned at the opening of the inlet duct.

In the specification, the term "in-duct" should be understood to mean that both airflow 1 and airflow 2 are forced ventilation suction airflows. An "in-duct" device should be understood to mean positioning an aspiration efficiency device of the present invention within an already existing ventilation system, thereby either retro-fitting the device to an existing ventilation system or using an aspiration efficiency device of the present invention within a ventilation system in a new build.

In the specification, the term "mechanically ventilated airflow" should be understood to mean air which is forced to flow by the presence of a man-made air pump or fan.

In the specification, the term "ambient airflow" should be understood to mean the natural movement of air in the earth's atmosphere.

## Brief Description of the Drawings

The invention will be more clearly understood from the following description of an embodiment thereof, given by way of example only, with reference to the accompanying drawings, in which:-

Figure 1 illustrates one aspect of a device of the present invention;

Figure 2A and Figure 2B illustrate another aspect of a device of the present invention;

Figure 3 illustrates the principal upon which the device of the present invention operates;

Figure 4 illustrates a further aspect of a device of the present invention;

Figure 5A and 5B illustrate an elevation and plan view of the device of the present invention as illustrated in Figure 4 in use in a building ventilation system; and

Figure 6 illustrates the device of the present invention as illustrated in Figure 4 in use in a building ventilation system.

## Detailed Description of the Drawings

Aspiration efficiency is a phenomenon which affects the transport of particles in a fluid passing through an orifice. In this specification, the term Aspiration Efficiency (AE) should be considered to mean the efficiency with which particles are transported from the ambient environment into the inlet of a sampler (or any orifice *e.g.* a ventilation system inlet) and is expressed as the ratio of the concentration entering the cross sectional area of the inlet, C, to that in the undisturbed upstream air $C_0$, AE = $C/C_0$ (Kramer *et al.*, 2004).

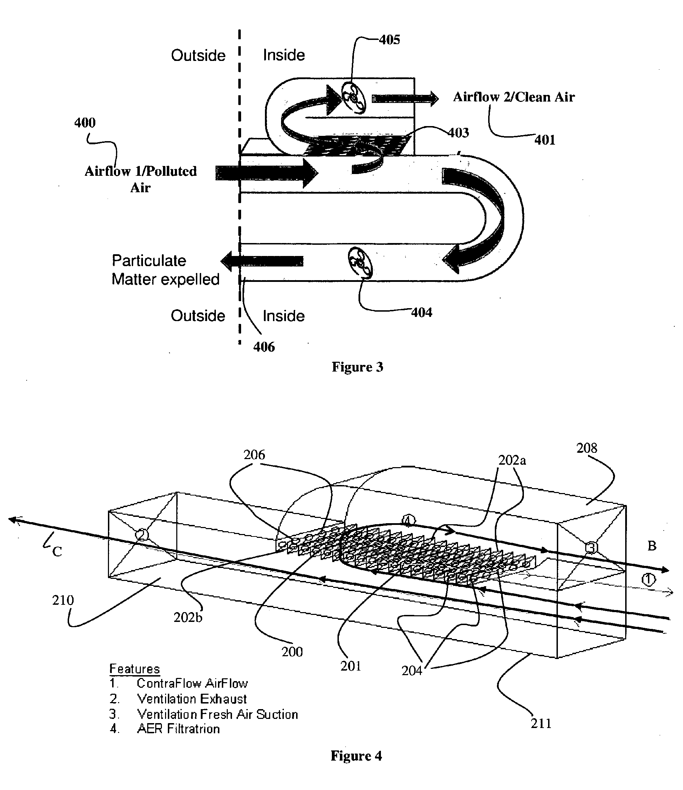

All aspects of the aspiration efficiency reducing device of the present invention operate on the principal of a device having two separate airflows as shown, for example, in Figure 3. Airflow 1 and Airflow 2 are arranged such that Airflow 1 (in this instance, polluted air) and Airflow 2 (in this instance, clean air) move in different directions to one another and the device of the present invention diverts part of Airflow 1 into Airflow 2. This is achieved by passing the airflow through a series of ventilation inlets, generally in the form of blunt nosed ventilation inlets. Reductions in the concentrations of particulate matter between Airflow 1 and Airflow 2 are achieved by taking advantage of the inertia of particles in Airflow 1 and through 'bounce-off' in the blunt nosed ventilation inlets. Air Flow 1 may be ambient atmospheric flow or mechanically ventilated flow within a ventilation system. Air flow 2 is a mechanically ventilated flow, such as, for example, an inlet stream generated in a building ventilation system.

The aspiration efficiency of an orifice is affected by a number of factors which are used in the design of the device of the invention, with respect to the device suitable for use as an out-of-duct device, to minimise the amount of PM entering a vent of a building. These factors include: the ambient wind speed; the ambient wind direction; the ventilation flow rate; the area of the inlet and the size of the particle in question. Larger inlet areas result in higher AE, high ambient wind speed results in higher particle inertia and thus lower aspiration efficiency as more energy is required to divert the trajectory of a particle into the ventilation inlet. Winds travelling in the direction of the ventilation inlet produce higher aspiration efficiency than those in the opposite direction. Again this is due to the fact that larger amounts of energy are required to divert the trajectory of a particle through $180^0$ than through $0°$. Higher ventilation rates impart higher amounts of energy on surrounding particles and result in higher aspiration efficiency (McNabola, A. Broderick, B. and Gill, L.W. A Numerical Aanalysis of the Aspiration Efficiency of a Personal Sampler. The International Journal of Environment and Pollution. Special Issue on: Particulate Air Pollution in Urban Environments, 41, (1/2), 2010, p109 - 123).

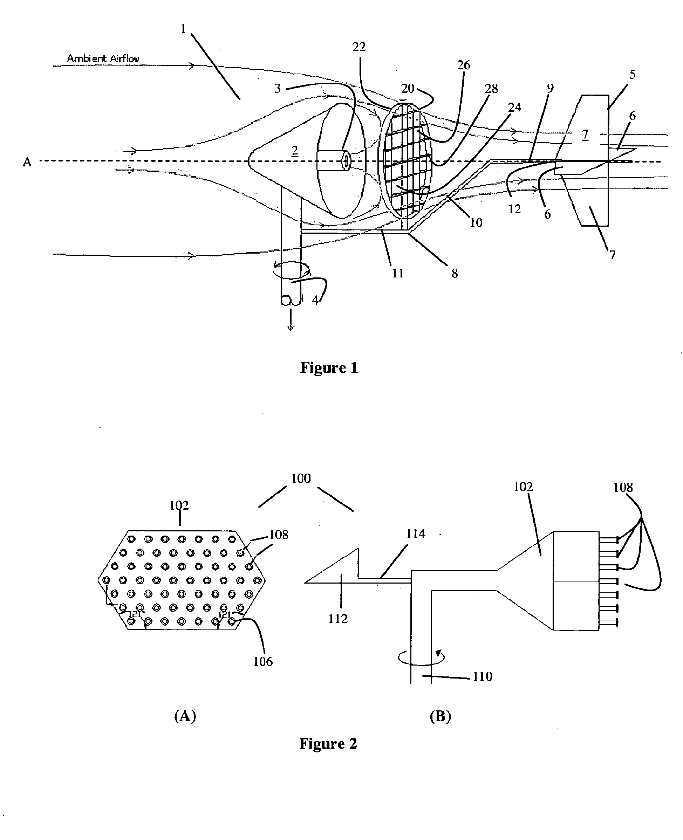

Referring now to the figures, and initially to Figure 1, where Figure 1 illustrates a general embodiment of an aspiration efficiency reducing (AER) device of the present invention, suitable for use as an out-of-duct AER device as illustrated in Figure 1. Specifically, Figure 1 illustrates a perspective view of an aspiration efficiency reducing device of the present invention, which is generally referred to by reference numeral 1. The device 1 comprises an airflow diversion means 2, which in this instance is configured as a hollow cone, having a ventilation inlet 3 positioned centrally therein. The ventilation inlet 3 is generally of the form of a blunt-nosed ventilation inlet. The diversion means 2 and inlet 3 are generally parallel to a flat horizontal surface, such as the ground or a roof of a building. The ventilation inlet 3 is continuous with a free-rotating base 4. The base 4 is preferably at an angle of 90° relative to the inlet 3 and substantially perpendicular to the flat horizontal surface.

A directional means 5 is secured to the free-rotating base 4 below the diversion means 2. The directional means 5 comprises a vane having a horizontal fin 6 and a vertical fin 7; the vertical fin 7 parallel to, and the horizontal fin 6 perpendicular to, the base 4. The directional means 5 can be secured to the base 4 by a boom 8. The boom 8 in this instance is configured in a stepped arrangement, comprising a top step 9, an angled step 10 and a bottom step 11, as shown in Figure 1. The stepped arrangement positions an axis point 12 - the point at which the horizontal fin 6 and vertical fin 7 meet on top step 9 - substantially along a horizontal axis A of the inlet 3.

Positioned between the diversion means 2 incorporating inlet 3 and the directional means 5 is an anti-turbulence means 20 in the form of a grid. The anti-turbulence means 20 comprises, in this instance, a substantially circular frame 22 comprising apertures 24 formed by interlocking vertical panels 26 and horizontal panels 28, essentially creating a grid-like appearance. The anti-turbulence means 20 is attached to the bottom step 11 of the boom 8. The diameter of the anti-turbulence means 20 is substantially the same as the diameter of the diversion means 2 at its widest point.

In use, particulate matter in an airstream approaching the ventilation inlet 3 would have to be forced to turn through substantially 180° from their original trajectory in order to enter the inlet 3. The ventilation inlet 3 contributes to lowering the AE further towards desired levels. Incorporating a directional means 5 to the device 1 on a freely rotating base 4 ensures that the angle of 180° is maintained to the ambient wind direction at all times, ensuring a low AE regardless of the ambient wind direction. In other words, the directional means 5 ensures the inlet 3 is facing substantially opposite to the ambient airflow direction. Using the ventilation system of a commercial building, the ventilation inlet 3 will draw air in from the zone behind the air flow diversion means 2. The diversion of airflow caused by diversion means 2 is likely to produce a turbulent wake downstream of the diversion means 2, which could result in the turbulent mixing of particles that may act to increase overall AE. To prevent this, the anti-turbulence means 20 minimises the impact of vortex shedding (*i.e.* reduce turbulence), preventing particulate matter from entering the inlet 3, and thereby decreases the AE to desired levels..

Referring now to Figure 2A and 2B there is illustrated another embodiment of the device of the present invention, which is generally referred to by reference numeral 100. The device 100 comprises an airflow diversion means 102, which in this instance is configured in a hexagonal shape, and comprises a plurality of apertures 106 which accommodate a plurality of ventilation inlets 108. The ventilation inlets 108 are generally of the form of a blunt-nosed ventilation inlet, similar to the ventilation inlet 3 illustrated in Figure 1. The diversion means 102 and ventilation inlets 108 are generally parallel to a flat horizontal surface, such as the ground or a roof of a building.

The device 100 further comprises a free-rotating base 110. The base 110 is continuous with the combined diversion means 102 and ventilation inlets 108. The base 110 is preferably at an angle of 90° relative to the diversion means 102 and substantially perpendicular to a flat horizontal surface.

A directional means 112 comprising a vane is secured to the free-rotating base 4 via boom 114 to ensure that the ventilation inlets 108 are facing substantially in the opposite direction to ambient airflow.

Referring now to Figure 3, there is illustrated the principal of an in-duct device as illustrated in Figures 4 to 6.

The principle is based on having two separate airflows as shown in Figure 3. Airflow 1 (400) and Airflow 2 (401) are arranged such that Airflow 1 (in this instance, polluted air) 400 and Airflow 2 (in this instance, clean air) 401 move in different directions to one another and the device of the present invention diverts part of Airflow 1 400 into Airflow 2 401. This is achieved by passing the airflow 400 through a series of ventilation inlets 403. Reductions in the concentrations of particulate matter between Airflow 1 400 and Airflow 2 401 are achieved by taking advantage of the inertia of particles in Airflow 1 and through 'bounce-off' in the ventilation inlets. The particulate matter in the airflow is removed through an exhaust duct 406 and away from the Air Flow 2 401. Air Flow 1 400 in this instance is a mechanically ventilated flow 404 within a ventilation system. Air flow 2 401 is a mechanically ventilated flow 405, such as, for example, an inlet stream generated in a building ventilation system.

Referring now to Figure 4, there is illustrated a further embodiment of the device of the present invention, which is generally referred to by reference numeral 200. The device 200, which is suitable for use in an in-duct ventilation system, comprises an airflow diversion means 201 comprising of series of parallel and alternating ridges 202a and grooves 202b, each ridge 202a and groove 202b further comprise a plurality of apertures 204 which accommodate a plurality of ventilation inlets 206. The ventilation inlets 206 are generally of the form of a blunt-nosed ventilation inlet, similar to the ventilation inlet 2 illustrated in Figure 1 and ventilation inlets 108 illustrated in Figure 2.

The device 200 is incorporated into the ventilation ducting system 211. The ducting system 211 comprises an incoming ventilation flow duct 208 and an outgoing ventilation flow duct 210. The duct 208 and duct 210 are aligned so that the duct 208 and duct 210 are in communication with each other and generally, but not necessarily, can be parallel to a flat horizontal surface, such as the ground or a roof of a building. By aligning the incoming and outgoing ventilation flow ducts 208, 210 as shown in Figure 4, a contra-flow airflow B is achieved and any particulate matter in an airstream approaching the ventilation inlets 206 would have to be forced to turn through up to 180° from their original trajectory in order to enter the ventilation inlets 206. This contra-air flow B is the same principle used in the devices illustrated in Figure 1 and Figure 2.

In use when the device 200 is mounted in a ventilation ducting system 201, contra-flow airflow B and exhaust stream C create two air flows, the exhaust stream C provides particulate matter with an alternative route to passing through the ventilation system while contra air flow B, provided by a building supply fan, sucks air through the device 200. The airflow diversion means 201 is set at an angle of up to 180° to the airflow C below and air is sucked through the plurality of ventilation inlets 206, as per the devices 1 and 100 illustrated in Figures 1 and 2, respectively.

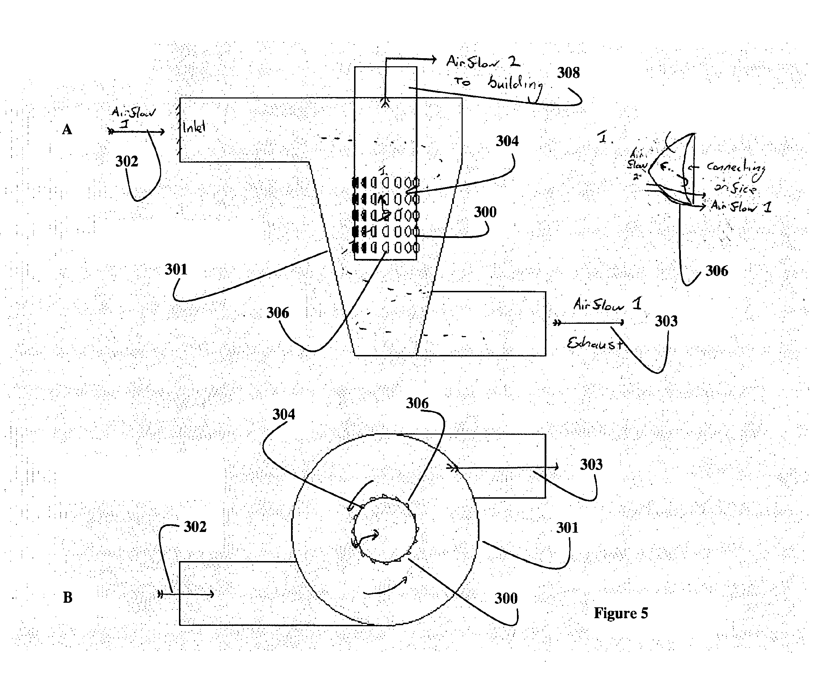

Referring now to Figure 5A and Figure 5B, there is illustrated the device 300 of the present invention as illustrated in Figure 4 which has been implemented in a ventilation system 301 of a building. The device 300 is can be retro-fitted to an existing ventilation system 301 or used in a new build ventilation system 301. In the ventilation system 301, a ventilation inflow 302 and ventilation outflow (exhaust) 303 are arranged such that the airflows are brought together to flow as a vortex. The vortex forces heavier particulate matter in the airflow towards the internal surface of the walls of the ventilation system 301 thereby reducing the amount of particulate matter from entering the building air supply through airflow 2 via supply duct 308. Air for the building supply via duct 308 is extracted from the centre of the vortex through an airflow directional means 304 mounted to the duct 308 facing substantially opposite the direction of airflow from ventilation inflow 302. The airflow directional means 304 comprises a plurality of apertures acting as ventilation inlets as described for Figure 4, which are partially covered by a plurality of ridges 306. In addition to the vortex arrangement of the airflow, the arrangement of the airflow directional means 304 further reduces the amount of particulate matter passing into the building air supply by diverting the trajectory of oncoming particles away from the ventilation inlets.

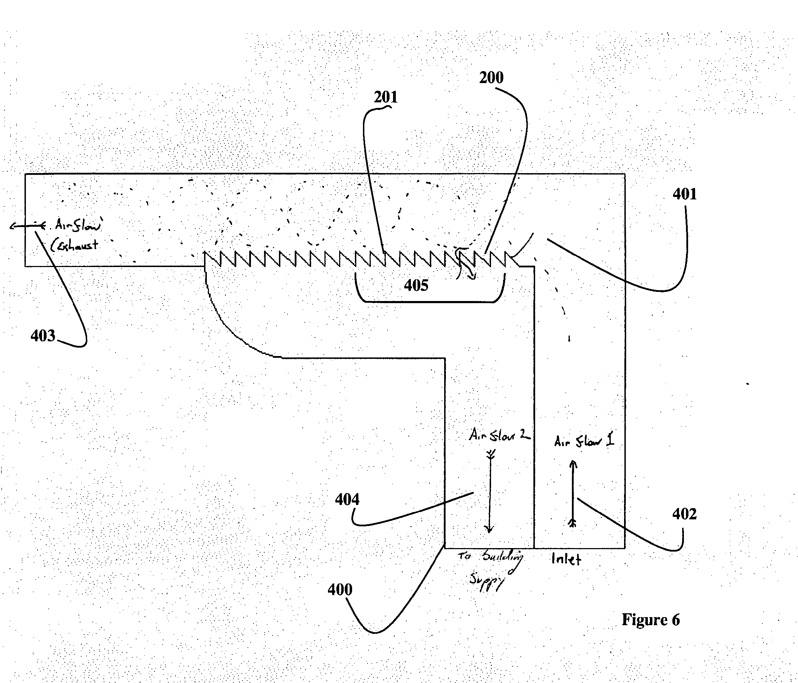

Referring now to Figure 6, there is illustrated the device 200 as described for Figure 4 in a ventilation system 400 which has incorporated a 90° bend 401 in an Airflow 1 duct 402 (inlet stream). The bend 401 will act to create vortex flow conditions as the airflow proceeds from Airflow 1 duct 402 to exhaust airflow duct 403. The building ventilation supply is brought in through Airflow 2 duct 404. The ventilation supply is extracted from the Airflow 1 duct 402 through the airflow diversion means 201 at a point 405 on the inside of the bend 401. This will reduce the transfer of larger particulate matter in the airflow stream to Airflow 2 duct 404.

Testing of the AER device suitable for use as an out-of-duct device to date has shown consistent reductions in the concentrations of particulate matter (PM) entering the vent system by 80 to 20% depending on the wind speed conditions. This performance is tested by simultaneously measuring the ambient PM concentration and the concentration entering the AER device, as well as ambient wind speed and direction. The ventilation velocity was measured using a portable air velocity meter while the ambient wind speed and direction where recorded by a fixed wind vane and anemometer which were established at the test site. This instrumentation enabled the measurement of the following required data:

- Air pollution upstream of AER($C_o$) (*i.e.* external or outside the AER device)
- Air pollution downstream of AER (C) (*i.e.* internal or inside the AER device)
- Wind speed
- Wind direction

- Ventilation speed

The aspiration efficiency could then be experimentally determined as $C/C_o$ and compared to the influencing variables of wind speed and vent rate. Measuring samples of $PM_{2.5}$ was performed using two high flow personal samplers (HFPS), which is a method shown to have satisfactory levels of accuracy and precision.

The AER device of the present invention is the first of its kind to enable the reduction of particulate pollution entering indoor environments with minimal impedance of normal ventilation flow and without the associated high capital and operating costs of alternative "clean air systems". As such, the AER device, in addition to its indoor air quality benefits, offers consumers the ability to reduce the energy consumption, $CO_2$ emissions and consumable costs associated with the use of fabric filters. The AER device operates as an attachment to the inlet of the ventilation system for any building/vehicle on the principle of aspiration efficiency. The device may also be designed to operate as an internal component of any ventilation system. The AER device described herein will make air pollution reduction systems more energy efficient and accessible to the global building services/vehicle systems markets. In addition the AER device may also have industrial applications in clean room industries such as, for example, microchip processing facilities. Furthermore, the AER device may be adapted for use as a breathing mask for motorcyclists and cyclists.

In the specification, the term "blunt-nosed ventilation inlet" should be considered to refer to Blunt-nosed sampler theory. Briefly, Blunt-nosed Sampler Theory extends the AE equation as shown below:

$$AE = \frac{C}{C_0} = 1 + \alpha \left[ \frac{U_0}{v} - 1 \right] \ , \ \text{where} \ \alpha = f(St, \frac{U_0}{v}) \ \text{and} \ St = \frac{\cdot d^2 \gamma U_0}{18 \eta \delta}$$

Therefore the AE is a function of the ratio between the mainstream air velocity, $U_0$, and the mean velocity at the entry to the sampler, $v$, as well as the Stokes number, $St$. The diameter of the particle in question, $d$, and the diameter of the tube, $\delta$, are also important factors in the Stokes number. It can be shown that the AE→1 as St→0 and that AE→$U_0$/v as St→∞. Thus, optimising the dimensions and where possible $U_0$/v ratio will reduce the AE of the AER device further. This reduction is due, in part, to the turbulence created at the mouth of the blunt-nosed ventilation inlet. The turbulence and blunt-nosed inlets *per se* encourage particles to bounce-off the inlet and thereby prevent particles from entering the ventilation system

In the specification the terms "comprise, comprises, comprised and comprising" or any variation thereof and the terms "include, includes, included and including" or any variation thereof are considered to be totally interchangeable and they should all be afforded the widest possible interpretation and vice versa.

Although the present invention has been described with respect to specific embodiments thereof, various changes and modifications can be carried out by those skilled in the art without departing from the scope of the claims.

The invention is not limited to the embodiments hereinbefore described but may be varied in both construction and detail.

**Claims**

1. An aspiration efficiency reducing device (1) comprising a ventilation inlet (3) for receiving airflow, an airflow diversion means (2) and a directional means (5), **characterised in that** the directional means (5) is adapted such that the ventilation inlet (3) is facing substantially opposite the direction of airflow in use.

2. An aspiration efficiency reducing device according to Claim 1, wherein the airflow diversion means is mounted within a ventilation ducting system.

3. An aspiration efficiency reducing device according to Claim 1 or Claim 2, wherein the airflow directional means comprises a plurality of apertures facing substantially opposite the direction of airflow.

4. An aspiration efficiency reducing device according to Claim 3 wherein the apertures are adapted to divert the trajectory of oncoming particulate matter in the airflow to prevent the particulate matter from entering the ventilation inlet for receiving airflow.

5. An aspiration efficiency reducing device according to any one of Claims 1 to 4 wherein the airflow direction means comprises a series of parallel and alternating ridges and grooves.

6. An aspiration efficiency reducing device according to Claims 5, in which the series of parallel and alternating ridges and grooves accommodate the plurality of apertures.

7.  An aspiration efficiency reducing device according to any preceding Claim, wherein the airflow diversion means is adapted to accommodate the ventilation inlet and/or wherein the airflow is a mechanically ventilated airflow.

8.  An aspiration efficiency reducing device according to Claim 1, wherein the device is mounted on a freely rotating base and optionally,
the airflow diversion means is mounted on the freely rotating base.

9.  An aspiration efficiency reducing device according to Claim 8, in which the airflow diversion means is configured to accommodate the ventilation inlet.

10. An aspiration efficiency reducing device according to any of Claims 8 or 9 in which the airflow directional means comprises a directional vane.

11. An aspiration efficiency reducing device according to any of the preceding claims in which the ventilation inlet is a blunt-nosed ventilation inlet.

12. An aspiration efficiency reducing device according to any preceding claims further comprising an anti-turbulence means, and/or
wherein the anti-turbulence means is positioned such that the airflow diversion means, the ventilation inlet and the anti-turbulence means are substantially aligned along a horizontal axis in substantially the opposite direction to airflow, and/or
the anti-turbulence means comprises a plurality of apertures in a frame.

13. An air pollution reducing device comprising the aspiration efficiency device of any one of claims 1 to 12.

14. A portable breathing mask comprising the aspiration efficiency device of any one of claims 1 to 12.

15. A vehicular ventilation system comprising the aspiration efficiency device of any one of claims 1 to 12.

**Patentansprüche**

1.  Vorrichtung (1) zum Verringern der Ansaugeffizienz, umfassend einen Lüftungseinlass (3) zum Empfangen eines Luftstroms, ein Luftstrom-Umlenkmittel (2) und ein Lenkmittel (5), **dadurch gekennzeichnet, dass** das Lenkmittel (5) derart angepasst ist, dass der Lüftungseinlass (3) im Gebrauch im Wesentlichen entgegengesetzt zur Richtung des Luftstroms weist.

2.  Vorrichtung zum Verringern der Ansaugeffizienz nach Anspruch 1, wobei das Luftstrom-Umlenkmittel in einem Lüftungskanalsystem angebracht ist.

3.  Vorrichtung zum Verringern der Ansaugeffizienz nach Anspruch 1 oder Anspruch 2, wobei das Luftstrom-Lenkmittel mehrere Öffnungen umfasst, die im Wesentlichen entgegengesetzt zur Richtung des Luftstroms weisen.

4.  Vorrichtung zum Verringern der Ansaugeffizienz nach Anspruch 3, wobei die Öffnungen dazu angepasst sind, die Flugbahn von sich nähernden Schwebstoffen in dem Luftstrom umzulenken, um zu verhindern, dass die Schwebstoffe in den Lüftungseinlass zum Empfangen des Luftstroms eindringen.

5.  Vorrichtung zum Verringern der Ansaugeffizienz nach einem der Ansprüche 1 bis 4, wobei das Luftstrom-Lenkmittel eine Folge paralleler und abwechselnder Rippen und Rillen umfasst.

6.  Vorrichtung zum Verringern der Ansaugeffizienz nach Anspruch 5, wobei die Folge paralleler und abwechselnder Rippen und Rillen die mehreren Öffnungen unterbringt.

7.  Vorrichtung zum Verringern der Ansaugeffizienz nach einem der vorangehenden Ansprüche, wobei das Luftstrom-Umlenkmittel dazu angepasst ist, den Lüftungseinlass unterzubringen und/oder
wobei es sich bei dem Luftstrom um einen mechanisch belüfteten Luftstrom handelt.

**8.** Vorrichtung zum Verringern der Ansaugeffizienz nach Anspruch 1, wobei die Vorrichtung auf einem sich frei drehenden Sockel angebracht ist und optional
das Luftstrom-Umlenkmittel auf dem sich frei drehenden Sockel angebracht ist.

**9.** Vorrichtung zum Verringern der Ansaugeffizienz nach Anspruch 8, wobei das Luftstrom-Umlenkmittel dazu ausgebildet ist, den Lüftungseinlass unterzubringen.

**10.** Vorrichtung zum Verringern der Ansaugeffizienz nach einem der Ansprüche 8 oder 9, wobei das Luftstrom-Lenkmittel ein Lenkblatt umfasst.

**11.** Vorrichtung zum Verringern der Ansaugeffizienz nach einem der vorangehenden Ansprüche, wobei es sich bei dem Lüftungseinlass um einen stumpfen Lüftungseinlass handelt.

**12.** Vorrichtung zum Verringern der Ansaugeffizienz nach einem der vorangehenden Ansprüche, weiter umfassend ein Antiwirbelmittel und/oder
wobei das Antiwirbelmittel derart positioniert ist, dass das Luftstrom-Umlenkmittel, der Lüftungseinlass und das Antiwirbelmittel im Wesentlichen entlang einer horizontalen Achse in der dem Luftstrom im Wesentlichen entgegengesetzten Richtung ausgerichtet sind, und/oder
das Antiwirbelmittel mehrere Öffnungen in einem Rahmen umfasst.

**13.** Vorrichtung zur Verringerung der Luftverschmutzung, umfassend die Ansaugeffizienz-Vorrichtung nach einem der Ansprüche 1 bis 12.

**14.** Tragbare Atemschutzmaske, umfassend die Ansaugeffizienz-Vorrichtung nach einem der Ansprüche 1 bis 12.

**15.** Fahrzeuglüftungssystem, umfassend die Ansaugeffizienz-Vorrichtung nach einem der Ansprüche 1 bis 12.

**Revendications**

**1.** Dispositif de réduction d'efficacité d'aspiration (1) comprenant une entrée de ventilation (3) destinée à recevoir un flux d'air, un moyen de déviation de flux d'air (2) et un moyen directionnel (5), **caractérisé en ce que** le moyen directionnel (5) est adapté de telle sorte que l'entrée de ventilation (3) fasse sensiblement face à la direction du flux d'air durant le service.

**2.** Dispositif de réduction d'efficacité d'aspiration selon la revendication 1, dans lequel le moyen de déviation de flux d'air est monté dans un système de canalisation de ventilation.

**3.** Dispositif de réduction d'efficacité d'aspiration selon la revendication 1 ou la revendication 2, dans lequel le moyen directionnel de flux d'air comprend une pluralité d'ouvertures faisant sensiblement face à la direction du flux d'air.

**4.** Dispositif de réduction d'efficacité d'aspiration selon la revendication 3, dans lequel les ouvertures sont adaptées pour dévier la trajectoire de matières particulaires entrantes dans le flux d'air de manière à empêcher la matière particulaire d'entrer dans l'entrée de ventilation destinée à recevoir le flux d'air.

**5.** Dispositif de réduction d'efficacité d'aspiration selon l'une quelconque des revendications 1 à 4, dans lequel le moyen directionnel de flux d'air comprend une série d'arêtes et de gorges parallèles et alternées.

**6.** Dispositif de réduction d'efficacité d'aspiration selon la revendication 5, dans lequel la série d'arêtes et de gorges parallèles et alternées reçoit la pluralité d'ouvertures.

**7.** Dispositif de réduction d'efficacité d'aspiration selon l'une quelconque des revendications précédentes, dans lequel le moyen de déviation de débit d'air est adapté pour recevoir l'entrée de ventilation et/ou dans lequel le flux d'air est un flux d'air ventilé mécaniquement.

**8.** Dispositif de réduction d'efficacité d'aspiration selon la revendication 1, dans lequel le dispositif est monté sur une base à rotation libre et facultativement, le moyen de déviation de flux d'air est monté sur la base à rotation libre.

**9.** Dispositif de réduction d'efficacité d'aspiration selon la revendication 8, dans lequel le moyen de déviation de flux d'air est configuré pour recevoir l'entrée de ventilation.

**10.** Dispositif de réduction d'efficacité d'aspiration selon l'une quelconque des revendications 8 ou 9, dans lequel le moyen directionnel de flux d'air comprend une aube directionnelle.

**11.** Dispositif de réduction d'efficacité d'aspiration selon l'une quelconque des revendications précédentes, dans lequel l'entrée de ventilation est une entrée de ventilation à embouchure arrondie.

**12.** Dispositif de réduction d'efficacité d'aspiration selon l'une quelconque des revendications précédentes, comprenant en outre un moyen anti-turbulence ; et/ou dans lequel le moyen anti-turbulence est positionné de telle sorte que le moyen de déviation de flux d'air, l'entrée de ventilation et le moyen anti-turbulence soient orientés sensiblement le long d'un axe horizontal sensiblement dans la direction opposée à celle du flux d'air, et/ou le moyen anti-turbulence comprend une pluralité d'ouvertures dans un châssis.

**13.** Dispositif de réduction de pollution de l'air comprenant le dispositif d'efficacité d'aspiration selon l'une quelconque des revendications 1 à 12.

**14.** Masque respiratoire portable comprenant le dispositif d'efficacité d'aspiration selon l'une quelconque des revendications 1 à 12.

**15.** Système de ventilation véhiculaire comprenant le dispositif d'efficacité d'aspiration selon l'une quelconque des revendications 1 à 12.

**Figure 1**

(A)                                           (B)

**Figure 2**

Figure 3

Features
1. ContraFlow AirFlow
2. Ventilation Exhaust
3. Ventilation Fresh Air Suction
4. AER Filtratrion

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006003515 A, Giles
- US 2005166583 A, Peterson
- RU 2262455

- AU 748039
- DE 3418417

**Non-patent literature cited in the description**

- **KRAMER M. ; AFCHINE A.** Sampling Characteristics of inlets operated at low U/Uo ratios: new insight from Computational Fluid Dynamics (CFX) modelling. *J. Aerosol Sci,* 2004, vol. 35, 683-694

- **MCNABOLA, A. ; BRODERICK, B. ; GILL, L.W.** A Numerical Aanalysis of the Aspiration Efficiency of a Personal Sampler. *The International Journal of Environment and Pollution. Special Issue on: Particulate Air Pollution in Urban Environments,* 2010, vol. 41 (1/2), 109-123